# EUROPÄISCHE PATENTSCHRIFT

(11) **EP 2 601 448 B1**
(45) Veröffentlichungstag und Bekanntmachung des Hinweises auf die Patenterteilung: **09.03.2022**
(21) Anmeldenummer: 11736065.1
(22) Anmeldetag: 19.07.2011
(51) Int. Cl.: F24C 3/12, F16K 31/08

(54) **MEHRFACHSTELLGERÄT FÜR GASGERÄTE**
MULTIREGULATING APPLIANCE FOR GAS APPLIANCES
APPAREIL DE RÉGULATION MULTIPLE POUR APPAREILS À GAZ

(30) Priorität: 06.08.2010 DE 102010039011
(43) Veröffentlichungstag der Anmeldung: 12.06.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/062373
(87) Internationale Veröffentlichungsnummer: WO 2012/016826

(56) Entgegenhaltungen:
- EP-A1- 1 462 725
- DE-A1- 1 753 166
- GB-A- 2 140 128
- US-A- 3 514 078
- US-A1- 2006 166 154

## Beschreibung

Die vorliegende Erfindung betrifft ein Mehrfachstellgerät für Gasgeräte, insbesondere für Gasbacköfen, wobei das Mehrfachstellgerät einen Gaseingang, einen Gasausgang und einen Regelbereich zum Regeln eines Gasvolumenstroms hat.

In herkömmlichen Gasbacköfen werden im Wesentlichen Gasarmaturen mit einem drehbaren Konus zum Öffnen und Schließen des Gasweges verwendet. Das Gehäuse des Mehrfachstellgerätes und der Konus sind mit Bohrungen bzw. mit einer Nut versehen, welche sich durch eine entsprechende Drehbewegung mehr oder weniger überdecken und so den Gasvolumenstrom beeinflussen. Dabei hat der drehbare Konus ausschließlich die Funktion, den Gasweg zu öffnen oder zu schließen.

Solche herkömmlichen Gasbacköfen haben ferner eine Temperaturregelung. Die Temperaturregelung wird dabei insbesondere durch einen Sollwertgeber in Form einer Kurvenscheibe, einen Temperaturregler, insbesondere in Form eines Faltenbalges, und einer Bypassdüse übernommen. Der Drehbereich einer solchen herkömmlichen Gasarmatur liegt üblicherweise zwischen 0° und 250°.

Dabei wird bei einem solchen herkömmlichen Armaturaufbau bei jedem Einstellvorgang der Temperatur nicht nur der Sollwertgeber für die Temperatur, sondern auch der Konus zum Öffnen und Schließen des Gasvolumenstromes betätigt. Dieser Umstand hat zur Folge, dass sich dadurch höhere Betätigungskräfte als bei einer Armatur ohne Temperaturregler ergeben.

Ein weiterer Nachteil einer solchen herkömmlichen Armatur liegt darin, dass durch die Drehbewegung des Konus der Drehbereich des handbetätigten Griffes auf etwa 250° begrenzt ist, weil sonst die Bohrung im Konus zu dicht an eine Gaseintrittsbohrung im Gehäuse des Mehrfachstellgerätes kommen würde.

Des Weiteren wird ein relativ großer Bauraum im Gehäuse durch die Integration des Konus als Absperrbauteil benötigt.

Die EP 1 462 725 A1 zeigt ein Gargerät mit wenigstens einem Gasbrenner, der über wenigstens ein Magnetventil an eine Gasquelle angeschlossen ist, und mit wenigstens einer Temperaturüberwachung, mit der das wenigstens eine Magnetventil bei Überschreiten einer vorbestimmten Temperatur im Gargerät schließbar ist.

Die DE 17 53 166 A1 beschreibt ein Gargerät mit einem Steuerventil, welches mit Hilfe eines zylindrischen Magneten geöffnet und geschlossen werden kann, der vertikal in einem Gehäuse gleitet und von einem am oberen Ende befestigten Zapfen geführt wird. Die US 3,514,078 A zeigt ein Gaskochgerät, bei dem die Luftzufuhr und damit auch die Gaszufuhr zu einem Venturirohr mit Hilfe eines linear verschiebbaren Schlittens einstellbar ist.

Der vorliegenden Erfindung liegt die Aufgabe zu Grunde, das Öffnen und Schließen des Gasvolumenstroms bei einem Mehrfachstellgerät für Gasgeräte zu verbessern.

Diese Aufgabe wird erfindungsgemäß dadurch gelöst, dass zwischen dem Gaseingang des Mehrfachstellgerätes und dem Regelbereich des Mehrfachstellgerätes ein Auf-Zu-Ventil angeordnet wird, welches mittels eines magnetisch wirksamen Körpers des Mehrfachstellgerätes, insbesondere mittels eines Permanentmagneten, betätigbar ist. Dabei ist der magnetisch wirksame Körper mit einem drehbaren Bauteil des Mehrfachstellgerätes zur Ventilbeeinflussung gekoppelt, wobei das Auf-Zu-Ventil einen bewegbaren Absperrkörper aufweist, der bei geschlossenem Auf-Zu-Ventil an einem Ventilsitz mit einer Dichtung anliegt und dadurch eine Öffnung im Ventilsitz verschließt, wobei das Auf-Zu-Ventil eine Feder aufweist, die bei geschlossenem Auf-Zu-Ventil den Absperrkörper auf den Ventilsitz drückt und wobei zum Öffnen des Auf-Zu-Ventils der Absperrkörper mittels der Kraft des magnetisch wirksamen Körpers entgegen der Kraft der Feder von dem Ventilsitz abhebt. Das Mehrfachstellgerät weist zusätzlich einen Sollwertgeber auf, der ebenfalls mittels des drehbaren Bauteils des Mehrfachstellgerätes verstellbar ist. Der Regelbereich weist einen Temperaturregler auf der sich dadurch auszeichnet, dass ein Kapillarrohr einen Temperaturfühler an einen Faltenbalg koppelt, sodass in einem Zwischenraum zwischen dem einem verstellbaren Sollwertgeber und einem Dichtsitz des Faltenbalges ein Spalt gebildet wird, und wobei parallel zu dem Sollwertgeber ein Bypass angeordnet ist.

Die Verwendung des magnetisch wirksamen Körpers stellt eine magnetische Justierung für das Auf-Zu-Ventil bereit. Durch die magnetische Justierung ist der Vorgang des Öffnens und Schließens des Gasvolumenstroms oder Gasweges leicht gleitend und bestimmend. Durch das leichte Gleiten ist die Reibung minimiert. Durch das Bestimmende erhält der Nutzer eine gewisse haptische Rückkopplung.

Des Weiteren kann die Baugröße der Gasarmatur in Folge der Ersetzung des herkömmlichen Konus wesentlich verkleinert werden. Auch die Betätigungskraft kann erheblich gesenkt werden. Weiters ist ein Blockieren des Absperrelementes nahezu ausgeschlossen, weil kein oder nur kaum reibender Verschleiß auftritt.

Ein weiterer Vorteil liegt darin, dass durch die erfindungsgemäße Anordnung ein Drehweg von ca. 320° zur Verfügung gestellt werden kann, wodurch eine deutlich präzisere Einstellung ermöglicht wird. Ferner ist das vorliegende Mehrfachstellgerät für eine jede Gasart einsetzbar.

In einer bevorzugten Ausführungsform ist der magnetisch wirksame Körper von einem Permanentmagnet gebildet, der dazu eingerichtet ist, das Auf-Zu-Ventil zu betätigen. In einer anderen Ausführungsform ist es ebenfalls möglich, als magnetisch wirksamen Körper einen selbst nicht magnetischen Körper aus ferromagnetischem Material vorzusehen. Zumindest ein Permanentmagnet ist dann im Bereich des Auf-Zu-Ventils vorgesehen, dessen magnetische Anziehungskraft dann - abhängig von der Position des magnetisch wirksamen Körpers - zwischen dem magnetisch wirksamen Körper und dem Permanentmagnet wirkt. Im Folgenden steht der Begriff "Permanentmagnet" stellvertretend auch für andere magnetisch wirksame Körper. Wenn die Bewegung des Permanentmagnets durch eine Bedienperson von Hand erfolgt, sind zum Schalten des Auf-Zu-Ventils keine elektrischen Komponenten erforderlich.

Das Auf-Zu-Ventil weist einen bewegbaren Absperrkörper auf, welcher bei geschlossenem Auf-Zu-Ventil an einem Ventilsitz mit einer Dichtung anliegt und dadurch eine Öffnung oder Ventilöffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des Auf-Zu-Ventils an dem Ventilsitz anliegt. Dabei wird der Absperrkörper insbesondere an die Dichtung des Ventilsitzes gedrückt oder gepresst.

Bevorzugt ist der Ventilsitz als eine im Wesentlichen ebene Fläche ausgeführt. Die ebene Fläche des Ventilsitzes bildet die Dichtfläche gegenüber dem Absperrkörper. Der in diesem Fall mit einer erhabenen Dichtkante ausgeführt ist. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche muss dann nur die Öffnung eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Bevorzugt ist der Absperrkörper von einem im Wesentlichen zylindrischen Stößel gebildet.

Das Auf-Zu-Ventil hat eine Feder, die bei geschlossenem Auf-Zu-Ventil den Absperrkörper auf den Ventilsitz drückt.

Bevorzugt ist die Feder in einem gasführenden Raum zwischen dem Gaseingang und dem Regelbereich des Mehrfachstellgerätes derart angeordnet, dass die Feder bei geschlossenem Auf-Zu-Ventil auf die Dichtung des Ventilsitzes drückt und dadurch die Öffnung im Ventilsitz gasdicht verschließt.

Bevorzugt ist die Feder zwischen dem Auf-Zu-Ventil und einem gasdicht angeordneten Deckel gekoppelt. Bevorzugt ist auf dem Deckel eine Teflonschicht zur Reduzierung der Reibung angeordnet. Weiters ist bei geschlossenem Auf-Zu-Ventil ein Spalt zwischen dem Absperrkörper des Auf-Zu-Ventils und dem Deckel gebildet.

Zum Öffnen des Auf-Zu-Ventils ist der Absperrkörper mittels der Kraft des Permanentmagneten entgegen der Kraft der Feder von dem Ventilsitz abhebbar. Damit kann das Auf-Zu-Ventil mittels des Permanentmagneten aktiv geöffnet werden. Der Absperrkörper ist insbesondere aus einem ferromagnetischen Material ausgebildet und wird zum Öffnen des Auf-Zu-Ventils von dem Permanentmagneten angezogen. Wenn der Permanentmagnet von dem Absperrkörper ausreichend weg bewegt wird, schließt das Auf-Zu-Ventil in Folge der Kraft der Feder, die den Absperrkörper auf den Ventilsitz drückt, automatisch.

Des Weiteren ist es auch möglich, den Absperrkörper des Auf-Zu-Ventils als Permanentmagnet auszuführen. Die Betätigung kann dann dadurch erfolgen, dass ein nicht-magnetischer ferromagnetischer Körper relativ zum Absperrkörper bewegt wird.

Zur Betätigung des Auf-Zu-Ventils ist die Position des vorzugsweise als Permanentmagnet ausgeführten magnetisch wirksamen Körpers relativ zu dem Absperrkörper des Auf-Zu-Ventils veränderbar. Der Absperrkörper wird von dem Permanentmagneten angezogen, wenn sich der Absperrkörper direkt oder im Wesentlichen direkt oberhalb des Permanentmagnets befindet. Andernfalls ist das Auf-Zu-Ventil mittels der auf den Absperrkörper wirkenden Kraft der Feder geschlossen.

Der vorzugsweise als Permanentmagnet ausgebildete magnetisch wirksame Körper ist mit einem drehbaren Bauteil gekoppelt. Das drehbare Bauteil hat insbesondere einen Griff für die Hand der Bedienperson. Folglich kann über den Griff und das drehbare Bauteil eine Ventilbeeinflussung erfolgen. Insbesondere auf Grund des veränderten Aufbaus ist ein Drehbereich des Griffs von ca. 320° möglich.

Eine besonders einfache Anordnung sieht vor, dass das drehbare Bauteil durch eine Bedienperson von Hand um eine Achse zur Betätigung des Auf-Zu-Ventils drehbar ist. Hierfür sind keinerlei elektrische oder elektronische Bauteile erforderlich. Die Betätigung des Auf-Zu-Ventils erfolgt ausschließlich durch die manuelle Kraft der Bedienperson, die den Permanentmagneten relativ zum dem Absperrkörper des Auf-Zu-Ventils bewegt.

Der Regelbereich des Mehrfachstellgeräts hat einen Temperaturregler, der insbesondere als ein Sollwertgeber-Temperaturregler ausgebildet ist.

Ferner wird eine Gasarmatur für Gasgeräte, insbesondere für Gasbacköfen, vorgeschlagen, welche ein wie oben erläutertes Mehrfachstellgerät aufweist.

Weiterhin wird ein Gasgerät, insbesondere ein Gasbackofen, vorgeschlagen, welches zumindest ein wie oben erläutertes Mehrfachstellgerät aufweist.

Weitere Vorteile und Einzelheiten der Erfindung werden anhand der in den schematischen Figuren dargestellten Ausführungsbeispiele näher erläutert. Dabei zeigen:
- Figur 1: den schematischen Aufbau des Mehrfachstellgeräts mit geschlossenem Auf-Zu-Ventil,
- Figur 2: den schematischen Aufbau des Mehrfachstellgeräts mit offenem Auf-Zu-Ventil mit niedrigster Reglerstufe, und
- Figur 3: den schematischen Aufbau des Mehrfachstellgeräts mit offenem Auf-Zu-Ventil mit höchster Reglerstufe.

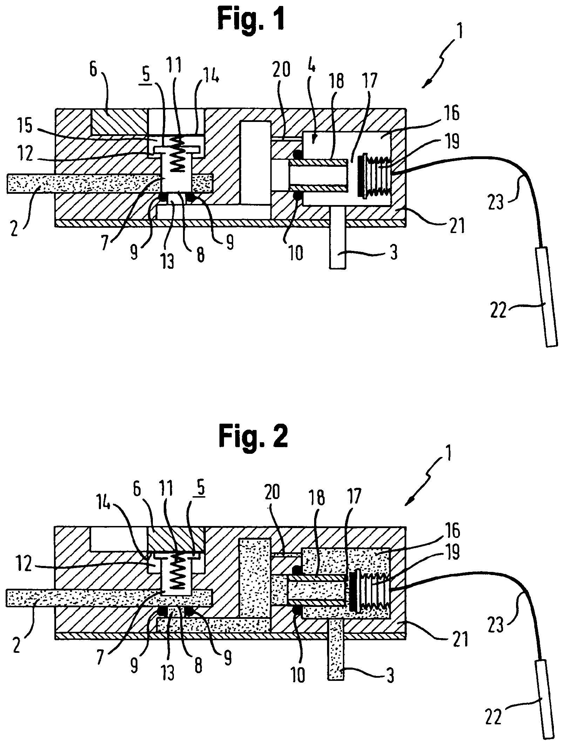

Die Figuren 1 bis 3 zeigen den schematischen Aufbau des erfindungsgemäßen Mehrfachstellgerätes 1 für Gasgeräte, insbesondere für Gasbacköfen. Das Mehrfachstellgerät 1 hat einen Gaseingang 2, einen Gasausgang 3 und einen Regelbereich 4 zum Regeln eines Gasvolumenstroms. Der Regelbereich 4 ist mit zumindest einer Dichtung abgedichtet.

Zwischen dem Gaseingang 2 und dem Regelbereich 4 ist ein Auf-Zu-Ventil 5 angeordnet. Das Auf-Zu-Ventil 5 ist mittels eines magnetisch wirksamen Körpers 6 betätigbar.

Der magnetisch wirksame Körper 6 ist beispielsweise als ein Permanentmagnet ausgebildet. Ferner ist das Mehrfachstellgerät 1 insbesondere als ein handbetätigbares Mehrfachstellgerät 1 ausgebildet.

Das Auf-Zu-Ventil 5 weist einen bewegbaren Absperrkörper 7 auf. Der bewegbare Absperrkörper 7 verschließt bei geschlossenem Auf-Zu-Ventil 5 einen Ventilsitz 8. Der Ventilsitz 8 hat eine Dichtung 9. Bei geschlossenem Auf-Zu-Ventil 5 verschließt der Absperrkörper 7 eine Öffnung 13 oder Ventilöffnung 13 im Ventilsitz 8.

Ferner hat das Auf-Zu-Ventil 5 eine Feder 11. Bei geschlossenem Auf-Zu-Ventil 5 drückt die Feder 11 den Absperrkörper 7 auf den Ventilsitz 8. Die Feder 11 ist in einem gasführenden Raum 12 zwischen dem Gaseingang 2 und dem Regelbereich 4 des Mehrfachstellgeräts 1 angeordnet. Dabei ist die Feder 11 insbesondere derart angeordnet, dass sie bei geschlossenem Auf-Zu-Ventil 5 auf die Dichtung 9 des Ventilsitzes 8 drückt und dadurch die Öffnung 13 im Ventilsitz 8 gasdicht verschließt. Die Feder 11 ist zwischen dem Auf-Zu-Ventil 5 und einem gasdicht angeordneten Deckel 14 gekoppelt. Zwischen dem Absperrkörper 7 und dem Deckel 14 ist ein Spalt 15 bei geschlossenem Auf-Zu-Ventil 5 gebildet. Über dem Deckel 14 ist vorzugsweise eine Teflonschicht zur Reduzierung der Reibung durch den Permanentmagneten 6 vorgesehen.

Zum Öffnen des Auf-Zu-Ventils 5 hebt der Absperrkörper 7 mittels der Kraft des magnetisch wirksamen Körpers 6 entgegen der Kraft der Feder 11 von dem Ventilsitz 8 ab. Zur Betätigung des Auf-Zu-Ventils 5 ist die Position des vorzugsweise als Permanentmagnet ausgebildeten magnetisch wirksamen Körpers 6 relativ zu dem Absperrkörper 7 des Auf-Zu-Ventils 5 veränderbar. Zu dieser Veränderung wird vorzugsweise ein drehbares Bauteil eingesetzt, welches mit dem magnetisch wirksamen Körper 6 gekoppelt ist. Das drehbare Bauteil ist bevorzugt durch eine Bedienperson von Hand um eine Achse zur Betätigung des Auf-Zu-Ventils 5 drehbar.

Der Regelbereich 4 hat einen Temperaturregler 16. In einem Zwischenraum 17 zwischen einem Sollwertgeber 18 und dem Dichtsitz eines Faltenbalges 19 ist ein Spalt gebildet. Ein Bypass 20 ist parallel zu dem Sollwertgeber 18 angeordnet.

Außerhalb des Gehäuses 21 des Mehrfachstellgeräts 1 sind ein Temperaturfühler 22 und ein Kapillarrohr 23 vorgesehen. Das Kapillarrohr 23 koppelt den Temperaturfühler 22 an den Faltenbalg 19.

Die Betätigung des Auf-Zu-Ventils 5 wird durch den Ablauf der Figuren 1 bis 3 deutlich. In der Figur 1 befindet sich der Permanentmagnet 6 in der Nullposition. In der Nullposition ist das Auf-Zu-Ventil 5 geschlossen und es erfolgt kein Gasdurchfluss durch die Öffnung 13. Das Auf-Zu-Ventil 5 dichtet den Ventilsitz 8 ab.

Durch eine Betätigung des Griffes wird der Permanentmagnet 6 aus der Nullposition verschoben (siehe Figur 2). Dabei nähert er sich dem Absperrkörper 7 des Auf-Zu-Ventils 5 und bewirkt durch seine Anziehungskraft, dass der Absperrkörper 7 gegen den Deckel 14 gezogen wird. Folglich öffnet das Auf-Zu-Ventil 5.

Das Gas strömt durch die Ventilöffnung 13 und dann weiter in den Regelbereich 4 der Armatur. In der Figur 2 ist beispielhaft die niedrigste Reglerstufe dargestellt. Diese Stufe zeichnet sich dadurch aus, dass der Zwischenraum 17 zwischen dem Sollwertgeber 18 und dem Dichtsitz des Faltenbalges 19 einen minimalen Spalt hat.

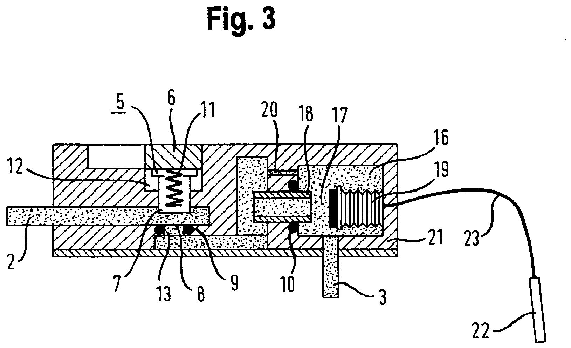

Wird der Griff durch die Bedienperson weiter verschoben, verändert der Permanentmagnet 6 seine Position nicht. Bei einer solchen weiteren Verschiebung wird nur der Sollwertgeber 18 verstellt. Dabei ist in der Figur 3 beispielhaft die höchste Reglerstufe dargestellt. Diese Stufe zeichnet sich dadurch aus, dass der Zwischenraum 17 zwischen dem Sollwertgeber 18 und dem Dichtsitz des Faltenbalges 19 einen maximalen Spalt bildet.

Wenn der Griff nun in die geschlossene Position verschoben wird, verändert zuerst der Sollwertgeber 18 seine Stellung und würde den Gasfluss zwischen dem Dichtsitz des Sollwertgebers 18 und dem Faltenbalg 19 unterbinden, weil in diesem Augenblick der Faltenbalg 19 in Folge der höheren Temperatur noch ausgedehnt ist. Dies könnte zum Erlöschen des Brenners führen. Damit dies nicht auftritt, strömt eine geringe Gasmenge über den Bypass 20 und verhindert somit ein unkontrolliertes Erlöschen des Brenners.

### Bezugszeichenliste:

- 1: Mehrfachstellgerät
- 2: Gaseingang
- 3: Gasausgang
- 4: Regelbereich
- 5: Auf-Zu-Ventil
- 6: Permanentmagnet
- 7: Absperrkörper
- 8: Ventilsitz
- 9: Dichtung
- 10: Dichtung
- 11: Feder
- 12: gasführender Raum
- 13: Öffnung
- 14: Deckel
- 15: Spalt
- 16: Temperaturregler
- 17: Zwischenraum
- 18: Sollwertgeber
- 19: Faltenbalg
- 20: Bypass
- 21: Gehäuse
- 22: Temperaturfühler
- 23: Kapillarrohr

## Patentansprüche

1. Mehrfachstellgerät (1) für Gasgeräte, insbesondere für Gasbacköfen, mit einem Gaseingang (2), einem Gasausgang (3) und einem Regelbereich (4) zum Regeln eines Gasvolumenstroms, wobei ein Auf-Zu-Ventil (5) zwischen dem Gaseingang (2) und dem Regelbereich (4) angeordnet ist, welches mittels eines magnetisch wirksamen Körpers (6) des Mehrfachstellgerätes (1) betätigbar ist, wobei der magnetisch wirksame Körper (6) mit einem drehbaren Bauteil des Mehrfachstellgerätes (1) zur Ventilbeeinflussung gekoppelt ist, wobei das Auf-Zu-Ventil (5) einen bewegbaren Absperrkörper (7) aufweist, der bei geschlossenem Auf-Zu-Ventil (5) an einem Ventilsitz (8) mit einer Dichtung (9) anliegt und dadurch eine Öffnung (10) im Ventilsitz (8) verschließt, wobei das Auf-Zu-Ventil (5) eine Feder (11) aufweist, die bei geschlossenem Auf-Zu-Ventil (5) den Absperrkörper (7) auf den Ventilsitz (8) drückt, wobei zum Öffnen des Auf-Zu-Ventils (5) der Absperrkörper (7) mittels der Kraft des magnetisch wirksamen Körpers (6) entgegen der Kraft der Feder (11) von dem Ventilsitz (8) abhebt, wobei das Mehrfachstellgerät (1) zusätzlich einen Sollwertgeber (18) aufweist, der ebenfalls mittels des drehbaren Bauteils des Mehrfachstellgerätes (1) verstellbar ist,
wobei der Regelbereich (4)
einen Temperaturregler (16) aufweist, der sich dadurch auszeichnet, dass ein Kapillarrohr (23) einen Temperaturfühler (22) an einen Faltenbalg (19) koppelt, sodass in einem Zwischenraum (17) zwischen dem verstellbaren Sollwertgeber (18) und einem Dichtsitz des Faltenbalges (19) ein Spalt gebildet ist, und wobei parallel zu dem Sollwertgeber (18) ein Bypass (20) angeordnet ist.

2. Mehrfachstellgerät nach Anspruch 1, **dadurch gekennzeichnet, dass** der magnetisch wirksame Körper (6) als ein Permanentmagnet ausgebildet ist.

3. Mehrfachstellgerät nach Anspruch 1 oder 2, **dadurch gekennzeichnet, dass** das Mehrfachstellgerät (1) als ein handbetätigbares Mehrfachstellgerät (1) ausgebildet ist.

4. Mehrfachstellgerät nach einem der Ansprüche 1 bis 3, **dadurch gekennzeichnet, dass** die Feder (11) in einem gasführenden Raum (12) zwischen dem Gaseingang (2) und dem Regelbereich (4) derart angeordnet ist, dass die Feder (11) bei geschlossenem Auf-Zu-Ventil (5) auf die Dichtung (9) des Ventilsitzes (8) drückt und dadurch die Öffnung im Ventilsitz (8) gasdicht verschließt.

5. Mehrfachstellgerät nach Anspruch 4, **dadurch gekennzeichnet, dass** die Feder (11) zwischen dem Auf-Zu-Ventil (5) und einem gasdicht angebrachten Deckel (14) gekoppelt ist.

6. Mehrfachstellgerät nach Anspruch 5, **dadurch gekennzeichnet, dass** bei geschlossenem Auf-Zu-Ventil (5) ein Spalt (15) zwischen dem Absperrkörper (7) und dem Deckel (14) gebildet ist.

7. Mehrfachstellgerät nach einem der Ansprüche 1 bis 6, **dadurch gekennzeichnet, dass** zur Betätigung des Auf-Zu-Ventils (5) die Position des vorzugsweise als Permanentmagnet ausgebildeten magnetisch wirksamen Körpers (6) relativ zu dem Absperrkörper (7) des Auf-Zu-Ventil (5) veränderbar ist.

8. Mehrfachstellgerät nach Anspruch 1, **dadurch gekennzeichnet, dass** das drehbare Bauteil durch eine Bedienperson von Hand um eine Achse zur Betätigung des Auf-Zu-Ventils (5) drehbar ist.

9. Mehrfachstellgerät nach einem der Ansprüche 1 bis 8, **dadurch gekennzeichnet, dass** der Regelbereich (4) einen Temperaturregler (16), insbesondere einen Sollwertgeber-Temperaturregler, aufweist.

10. Gasarmatur mit zumindest einem Mehrfachstellgerät (1) nach einem der Ansprüche 1 bis 9.

11. Gasgerät, insbesondere Gasbackofen, welches eine Gasarmatur nach Anspruch 10 aufweist.

## Claims

1. Multiregulating device (1) for gas appliances, in particular for gas ovens, with a gas input (2), a gas output (3) and a regulating region (4) for regulating a gas volume flow, wherein an open-closed valve (5) is arranged between the gas input (2) and the regulating region (4), which can be actuated by means of a magnetically active body (6) of the multiregulating device (1), wherein the magnetically active body (6) is coupled to a rotatable component of the multiregulating device (1) in order to influence the valve, wherein the open-closed valve (5) has a movable shut-off body (7) which, when the open-closed valve (5) is closed, rests against a valve seat (8) with a seal (9) and in doing so closes off an opening (10) in the valve seat (8), wherein the open-closed valve (5) has a spring (11) which, when the open-closed valve (5) is closed, presses the shut-off body (7) against the valve seat (8), wherein, in order to open the open-closed valve (5), the shut-off body (7) raises from the valve seat (8) by means of the force of the magnetically active body (6) counter to the force of the spring (11), wherein the multiregulating device (1) additionally has a target value encoder (18) which likewise can be adjusted by means of the rotatable component of the multiregulating device (1), wherein the regulating region (4) has a temperature regulator (16) which is **characterised in that** a capillary tube (23) couples a temperature sensor (22) to a bellows (19), so that a gap is formed in an intermediate space (17) between the adjustable target value encoder (18) and a seal seat of the bellows (19), and wherein a bypass (20) is arranged in parallel with the target value encoder (18).

2. Multiregulating device according to claim 1, **characterised in that** the magnetically active body (6) is embodied as a permanent magnet.

3. Multiregulating device according to claim 1 or 2, **characterised in that** the multiregulating device (1) is embodied as a manually actuatable multiregulating device (1).

4. Multiregulating device according to one of claims 1 to 3, **characterised in that** the spring (11) is arranged in a gas-guiding space (12) between the gas input (2) and the regulating region (4) in such a manner that the spring (11) presses against the seal (9) of the valve seat (8) when the open-closed valve (5) is closed and in doing so closes off the opening in the valve seat (8) in a gas-tight manner.

5. Multiregulating device according to claim 4, **characterised in that** the spring (11) is coupled between the open-closed valve (5) and a lid (14) attached in a gas-tight manner.

6. Multiregulating device according to claim 5, **characterised in that** a gap (15) is formed between the shut-off body (7) and the lid (14) when the open-closed valve (5) is closed.

7. Multiregulating device according to one of claims 1 to 6, **characterised in that** in order to actuate the open-closed valve (5) the position of the magnetically active body (6), which is preferably embodied as a permanent magnet, relative to the shut-off body (7) of the open-closed valve (5) can be modified.

8. Multiregulating device according to claim 1, **characterised in that** the rotatable component can be rotated about an axis manually by an operator in order to actuate the open-closed valve (5).

9. Multiregulating device according to one of claims 1 to 8, **characterised in that** the regulating region (4) has a temperature regulator (16), in particular a target value encoder temperature regulator.

10. Gas fitting with at least one multiregulating device (1) according to one of claims 1 to 9.

11. Gas appliance, in particular gas oven, which has a gas fitting according to claim 10.

## Revendications

1. Appareil régleur multiple (1) pour appareils à gaz, en particulier pour fours de cuisson à gaz, comprenant une entrée de gaz (2), une sortie de gaz (3) et une zone de réglage (4) pour le réglage du courant de volume de gaz, dans lequel se trouve une vanne d'ouverture/fermeture (5) entre l'entrée de gaz (2) et la zone de réglage (4), laquelle est actionnée au moyen d'un corps à fonctionnement magnétique (6) de l'appareil régleur multiple (1), dans lequel le corps à fonctionnement magnétique (6) est couplé à un module rotatif de l'appareil régleur multiple (1) pour agir sur la vanne, dans lequel la vanne d'ouverture/fermeture (5) comprend un corps de blocage mobile (7) qui jouxte, vanne d'ouverture/fermeture (5) fermée, un siège de vanne (8) pourvu d'un joint (9) et qui ferme ainsi l'orifice (10) dans le siège de vanne (8), dans lequel la vanne d'ouverture/fermeture (5) comprend un ressort (11), lequel comprime le corps de blocage (7) sur le siège de vanne (8) quand la vanne d'ouverture/fermeture (5) est fermée, dans lequel, pour l'ouverture de la vanne d'ouverture/fermeture (5), le corps de blocage (7) s'élève du siège de vanne (8) au moyen de la force du corps à fonctionnement magnétique (6) contre la force du ressort (11), dans lequel l'appareil régleur multiple (1) comprend en outre un indicateur de valeur théorique (18), qu'on peut également régler au moyen du module rotatif de l'appareil régleur multiple (1), dans lequel la zone de réglage (4) comprend un régulateur de température (16) qui se distingue en ce qu'un tuyau capillaire (23) couple un détecteur de température (22) sur un soufflet, de sorte qu'il se forme, dans un espace intermédiaire (17) entre l'indicateur de valeur théorique (18) réglable et le siège de joint du soufflet (19), une fente, et dans lequel se trouve un bypass (20) parallèlement à l'indicateur de valeur théorique (18).

2. Appareil régleur multiple selon la revendication 1, **caractérisé en ce que** le corps à fonctionnement magnétique (6) est réalisé en tant qu'aimant permanent.

3. Appareil régleur multiple selon la revendication 1 ou 2, **caractérisé en ce que** l'appareil régleur multiple (1) est réalisé en tant qu'appareil régleur multiple (1) actionnable à la main.

4. Appareil régleur multiple selon l'une des revendications 1 à 3, **caractérisé en ce que** le ressort (11) se trouve dans un espace de conduite de gaz (12) entre l'entrée de gaz (2) et la zone de réglage (4) de façon que le ressort (11) comprime le joint (9) du siège de vanne (8) quand la vanne d'ouverture/fermeture (5) est fermée, et protège ainsi l'orifice dans le siège de vanne (8) contre toute incursion de gaz.

5. Appareil régleur multiple selon la revendication 4, **caractérisé en ce que** le ressort (11) est couplé entre la vanne d'ouverture/fermeture (5) et un couvercle (14) étanche aux gaz.

6. Appareil régleur multiple selon la revendication 5, **caractérisé en ce qu'**il se forme une fente (15) entre le corps de blocage (7) et le couvercle (14) quand la vanne d'ouverture/fermeture (5) est fermée.

7. Appareil régleur multiple selon l'une des revendications 1 à 6, **caractérisé en ce que**, pour actionner la vanne d'ouverture/fermeture (5), il est possible de modifier la position du corps à fonctionnement magnétique (6) réalisé de préférence en tant qu'aimant permanent, par rapport au corps de blocage (7) de la vanne d'ouverture/fermeture (5).

8. Appareil régleur multiple selon la revendication 1, **caractérisé en ce que** pour l'actionnement de la vanne d'ouverture/fermeture (5) une personne de service peut faire graviter mécaniquement le module rotatif autour d'un axe.

9. Appareil régleur multiple selon l'une des revendications 1 à 8, **caractérisé en ce que** la zone de réglage (4) comprend un régulateur de température (16), en particulier un indicateur de valeur théorique-régulateur de température.

10. Robinetterie de gaz comprenant au moins un appareil régleur multiple (1) selon l'une des revendications 1 à 9.

11. Appareil à gaz, en particulier four de cuisson à gaz, lequel comprend une robinetterie de gaz selon la revendication 10.
